# NEUE EUROPÄISCHE PATENTSCHRIFT

(11) **EP 4 093 153 B2**
(45) Veröffentlichungstag und Bekanntmachung des Hinweises auf die Entscheidung über den Einspruch: **24.06.2026**
(45) Hinweis auf die Patenterteilung: 06.12.2023
(21) Anmeldenummer: 21175038.5
(22) Anmeldetag: 20.05.2021
(51) Int. Cl.: H05B 6/10, H05B 6/42

(54) **VORRICHTUNG ZUR INDUKTIVEN ERWÄRMUNG VON METALLGUT**
DEVICE FOR INDUCTIVE HEATING OF METAL MATERIAL
DISPOSITIF DE CHAUFFAGE INDUCTIF DE PRODUITS MÉTALLIQUES

(43) Veröffentlichungstag der Anmeldung: 23.11.2022
(73) Patentinhaber: IAS GmbH, 58640 Iserlohn (DE)
(72) Erfinder: Löbbe, Dr. Christian Heinrich, 59199 Bönen (DE); Passoni, Dr. Marco, 27010 Copiano (PV) (IT); Weckes, Dr. Jan, 58730 Fröndenberg (DE)
(74) Vertreter: Patentanwälte Dörner & Kötter PartG mbB

(56) Entgegenhaltungen:
- WO-A1-2020/040214
- DE-A1- 2 921 472
- US-A- 5 003 145
- US-A1- 2002 148 830
- US-B1- 6 963 056

## Beschreibung

Die Erfindung betrifft eine Vorrichtung zur induktiven Erwärmung von Metallgut nach dem Oberbegriff des Patentanspruchs 1.

Vorrichtungen zur induktiven Erwärmung von Metallgut, sogenannte Induktionsöfen, sind seit Jahrzehnten bekannt. Sie werden eingesetzt, um Metalle auf effiziente Art und Weise zu erwärmen oder zu schmelzen.

Die prozesstechnischen Anforderungen der Temperaturführung bei der Erwärmung von Metallblöcken bzw. -bolzen zur Umformung sind in den letzten Jahren stetig gestiegen. Die richtige Blocktemperatur ist von zentraler Bedeutung für einen wirtschaftlichen und qualitätsgerechten Strangpressbetrieb. Die Problematik des Anwärmprozesses unterscheidet heute in der Regel zwei Teilaufgaben: Die Erwärmung des Bolzens auf Prozesstemperatur und die Erzeugung eines axialen Blocktemperaturprofils (Taper), welches die Erwärmung während des Umformprozesses derart kompensiert, dass ein isothermer Pressprozess erreicht wird. Zur Erwärmung der Metallblöcke werden unter anderem Induktionsanlagen eingesetzt, bei denen die für die Erwärmung erforderliche Energie direkt in den zu erwärmenden Metallblock induziert wird, so dass das gewünschte Wärmeprofil unmittelbar in dem Metallblock entsteht, wodurch eine besonders effiziente Weise der Erwärmung bewirkt ist. Hierzu sind mehrere Induktionsspulen angeordnet, die jeweils über eine zugeordnete Wechselstromversorgung verfügen.

Der elektrische Wirkungsgrad der Induktionsanlage ist entscheidend für eine effiziente Erwärmung des Metallgutes. Dieser wird definiert durch die Nutzwärme in Relation zur eingesetzten elektrischen Energie. Die Differenz entspricht im Wesentlichen den Verlusten der Induktionsspulen.

Bei einem geringen Verhältnis der elektrischen Leitfähigkeit der Induktionsspule (Kupfer) zu dem zu erwärmenden Metallgut (beispielsweise Aluminium) ist der elektrische Wirkungsgrad gering. Zur Optimierung des elektrischen Wirkungsgrades werden mehrlagige Spulenwicklungen vorgesehen, um eine hohe magnetische Flussdichte im zu erwärmenden Metallgut zu erzeugen. Ab einer bestimmten radialen Lagenzahl der Spule ist keine signifikante Verbesserung des Wirkungsgrads mehr erzielbar, da der Abstand zwischen dem Metallgut und der äußeren radialen Lagen zu groß wird. Zum Wickeln der mehrlagigen Spulen werden daher rechteckige Kupferprofile verwendet, die möglichst flach ausgeführt sind.

Problematisch bei einer ungekühlten Spule sind die auftretenden Verluste, die zu einer thermischen Belastung führen. Um die Spulen zur Blockerwärmung vor einem Schaden zu bewahren sind diese durch eine geeignete Kühlung zu schützen. Neben dem durch den erzeugten Wärmestrom wirkt auf die Spule außerdem ein Wärmestrom vom erwärmten Block ein. Obwohl die innere Spulenlage durch eine Isolationsschicht vom erwärmten Block thermisch getrennt wird, ist dieser Wärmestrom in der Regel nicht vernachlässigbar. Die Summe beider Wärmeströme, die Spulenverluste und die Wandverluste sind durch die Kühlung abzuführen.

Daher werden zum Wickeln der mehrlagigen Spulen rechteckige Kupferhohlprofile verwendet, die neben dem elektrischen Strom auch einen Kühlmittelstrom leiten. Das Kühlmittel, in der Regel Kühlwasser, steht im unmittelbaren Kontakt zum Stromleiter.

Die minimale Bauhöhe dieser Kupferhohlprofile ist durch die innere Hohlkammer für die Kühlmitteldurchleitung bestimmt. Wird die Hohlkammer zu flach gewählt, ist das Kupferhohlprofil im Betrieb empfindlich für Verstopfungen, sodass die Kühlfunktion nicht mehr erfüllt wird. Außerdem ist der hydraulische Widerstand bei einer flachen Hohlkammer hoch, womit der erforderliche Druck steigt. Hohe Drücke sind zur Spulenkühlung jedoch nicht wünschenswert, da diese Leckagen begünstigen können. Die Auslegung dieser mehrlagigen Spulen ist daher regelmäßig ein Kompromiss, bei dem Anforderungen der elektrischen Stromleitung und der Kühlmittelleitung zu erfüllen sind.

Bei einer ungekühlten Spule ist die Leistungsdichte der Spule hingegen erheblich begrenzt.

Das Dokument DE 29 21 472 A1 offenbart eine Vorrichtung zur induktiven Erwärmung von Metallgut, insbesondere Aluminiumstangen oder -blöcken, umfassend eine Anordnung von Induktionsspulen, die aus Wicklungen von Stromleitern gebildet sind und eine Durchführung für die zu erwärmenden Stangen oder Blöcke begrenzen, wobei die Stromleiter durch massive Vollprofile gebildet sind und wobei Mittel zum Kühlen der Induktionsspulen angeordnet sind.

Um den Erwärmungsprozess in einer vorgegebenen Zeit zu realisieren, sind jedoch hohe Leistungsdichten erforderlich. Lange Aufwärmzeiten gehen mit der negativen Beeinträchtigung der Mikrostruktur, thermischen Ofenverlusten und einem großen Investitions- und Platzbedarf einher.

Hier will die Erfindung Abhilfe schaffen. Der Erfindung liegt die Aufgabe zugrunde, eine Vorrichtung zur induktiven Erwärmung von Metallgut, insbesondere Aluminiumstangen oder -blöcken bereitzustellen, bei der der elektrische Wirkungsgrad der Induktionsspulen erhöht ist. Gemäß der Erfindung wird diese Aufgabe durch eine Vorrichtung mit den Merkmalen des kennzeichnenden Teils des Patentanspruchs 1 gelöst.

Mit der Erfindung ist eine Vorrichtung zur induktiven Erwärmung von Metallgut, insbesondere Aluminiumstangen oder -blöcken, bereitgestellt, bei der der elektrische Wirkungsgrad der Induktionsspulen erhöht ist. Dadurch, dass die Stromleiter der Wicklungen durch massive Vollprofile gebildet sind, wobei die Mittel zum Kühlen der Induktionsspulen durch zwischen den Induktionsspulen angeordnete Kühlmittelleitungen gebildet sind, ist eine signifikante Steigerung des elektrischen Wirkungsgrades erzielt. Bei einer hohen Lagenzahl bauen diese Vollprofile im Vergleich zum hohlen Kupferprofil platzsparend auf. Bevorzugt sind die Wicklungen aus massiven Flachleitern gebildet, die einen rechteckigen Querschnitt aufweisen.

Erfindungsgemäß sind die Mittel zum Kühlen der Induktionsspulen durch Kühlringscheiben gebildet, in denen jeweils wenigstens ein Kühlkanal angeordnet ist und die zwischen den Induktionsspulen angeordnet sind. Hierdurch ist eine weiter minimierte Bauhöhe der Leiterwicklungen der Spule ermöglicht. Vorzugsweise sind die Kühlringscheiben aus einem metallischen Werkstoff oder aus Kunststoff hergestellt.

Werden massive Flachleiter mit Rechteckquerschnitt für einen Wickelaufbau verwendet, die durch radiale oder durch axiale Kühlscheiben gekühlt werden, können hohe Leistungsdichten bei einem hohen Wirkungsgrad umgesetzt werden.

Bevorzugt ist zwischen den Halbzwickeln wenigstens einer Induktionsspule eine Kühlringscheibe angeordnet. Hierdurch ist eine verbesserte Kühlleistung erzielt.

Gemäß einer ersten Alternative der Erfindung ist wenigstens eine der Kühlringscheiben in Form einer gewickelten Rohrleitung mit Rechteckquerschnitt gebildet. Hierdurch ist eine flächige Kühlung bei gleichzeitig hoher Strömungsgeschwindigkeit des Kühlmittels erzielt, wodurch die Kühlleistung weiter verbessert ist.

Gemäß einer zweiten Alternative der Erfindung ist wenigstens eine der Kühlringscheiben in Form einer Wendewicklung einer Rohrleitung mit Rechteckquerschnitt gebildet und weist einen radialen Spalt auf. Hierdurch ist eine Temperaturmessung eines von den Induktionsspulen umgebenen Metallguts mittels Pyrometer ermöglicht.

Unter eine Wendewicklung ist vorstehend eine Wicklung zu verstehen, bei der vor Vollendung einer Kreisbahn die Wicklungsrichtung umgekehrt wird, wonach die folgende Wicklung in umgekehrter Richtung auf die vorangehende Wicklung aufgelegt wird. Im Gegensatz hierzu wird bei einer "normalen" Wicklung die Wickelrichtung lediglich einmal geändert, um beide Enden der Leitung nach außen zu führen.

In weiterer Ausgestaltung der Erfindung sind die beiden Enden der Rohrleitung abgewinkelt und parallel zueinander radial an die Kühlringscheibe angestellt. Hierdurch ist ein zentraler Anschluss einer Kühlmittelumwälzeinrichtung ermöglicht.

In einer bevorzugten Ausgestaltung der Erfindung sind die Induktionsspulen von einer elektrischen Spannung mit einer Frequenz von wenigstens 150 Hz gespeist. Es hat sich gezeigt, dass hierdurch ein besonders hoher elektrischer Wirkungsgrad erzielbar ist. Bevorzugt beträgt die Frequenz wenigstens 180 Hz, besonders bevorzugt wenigstens 250 Hz.

Andere Weiterbildungen und Ausgestaltungen der Erfindung sind in den übrigen Unteransprüchen angegeben. Ausgestaltungen der Erfindung sind in den Zeichnungen dargestellt und werden nachfolgend im Einzelnen beschrieben. Es zeigen:
Fig. 1 die schematische Darstellung der Induktionsspulenanordnung einer Vorrichtung zur induktiven Erwärmung von Metallgut mit eingelegtem Aluminiumbolzen
   a) in räumlicher Darstellung;
   b) in der Seitenansicht;
   c) in der Vorderansicht;
   d) im Längsschnitt A-A;
Fig. 2 die schematische Darstellung einer Kühlringscheibe der Induktionsspulenanordnung aus Figur 1
   a) in der Draufsicht;
   b) in Detaildarstellung des Ausschnitts A;
Fig. 3 die schematische Darstellung einer Kühlringscheibe in einer geschlossenen Ausführungsform
   a) in der Draufsicht;
   b) in Detaildarstellung des Ausschnitts A;
Fig. 4 die schematische Darstellung einer weiteren Ausführungsform einer Induktionsspulenanordnung einer Vorrichtung zur induktiven Erwärmung von Metallgut in mit eingelegtem Aluminiumbolzen
   a) in räumlicher Darstellung;
   b) in der Seitenansicht;
   c) in der Vorderansicht;
   d) im Längsschnitt A-A;
Fig. 5 die schematische Darstellung einer dritten Ausführungsform einer Induktionsspulenanordnung einer Vorrichtung zur induktiven Erwärmung von Metallgut mit eingelegtem Aluminiumbolzen
   a) in räumlicher Darstellung;
   b) in der Seitenansicht;
   c) in der Vorderansicht;
   d) im Längsschnitt A-A.

Die als Ausführungsbeispiel gewählte Vorrichtung zur induktiven Erwärmung von Metallgut ist im Wesentlichen durch einen Induktionsofen gebildet, der eine Anordnung von Induktionsspulen umfasst, die jeweils über eine Wechselstromversorgung gespeist sind. Jeder Stromversorgungskreislauf besteht aus einem Wechselrichter zur Bereitstellung der Wirkleistung sowie einem Kompensationskondensator zur Bereitstellung der Blindleistung. Dabei wird jeder Wechselrichter über einen Gleichrichter versorgt, der die elektrische Leistung vom Dreiphasenwechselstrom in Gleichstrom wandelt. Dabei kann jedem Wechselrichter ein Gleichrichter zugeordnet sein, oder es kann auch allen Wechselrichtern ein Gleichrichter zugeordnet sein. Der grundsätzliche Aufbau solcher Induktionsöfen ist dem Fachmann bekannt und beispielsweise in der EP 3 790 180 A1 beschrieben. Daher wird nachfolgend die Anordnung der Induktionsspulenanordnung erfindungsgemäßer Vorrichtungen beschrieben, die den Kern der Erfindung bildet.

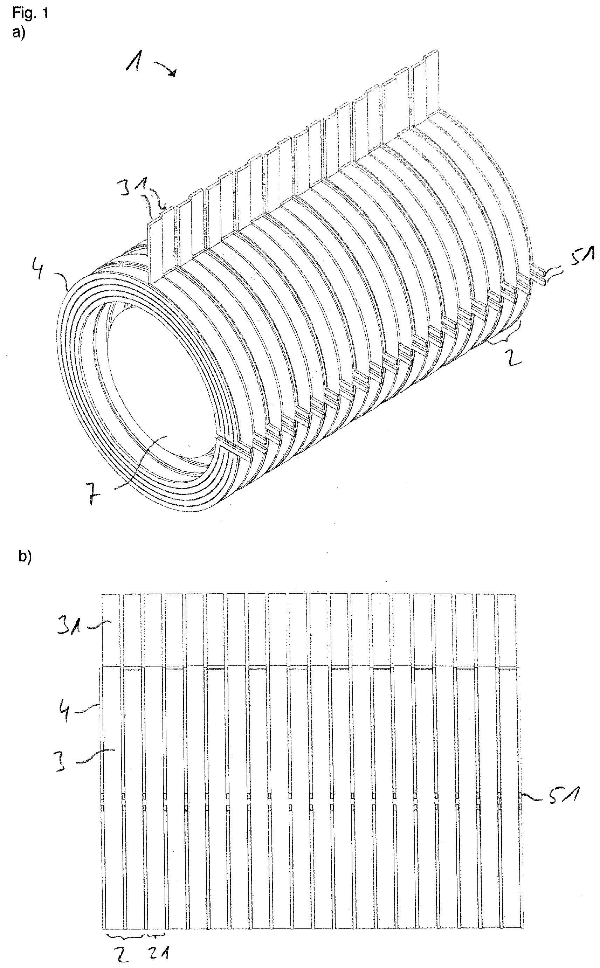

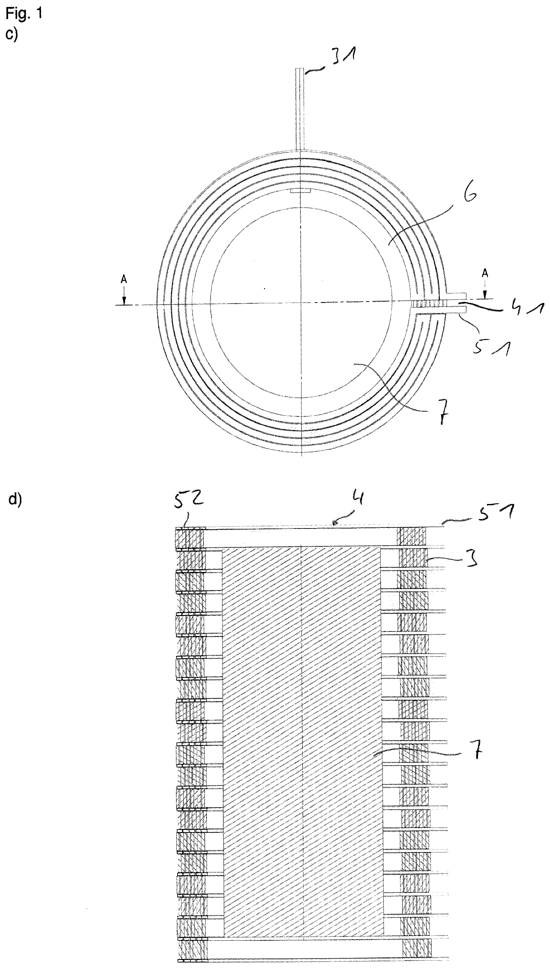

In Figur 1 ist eine Induktionsspulenanordnung einer Vorrichtung zur induktiven Erwärmung von Metallgut einer ersten Ausführungsform gezeigt. Die Induktionsspulenanordnung 1 besteht im Wesentlichen aus einer Anzahl von Spulen 2, zwischen denen Kühlringscheiben 4 angeordnet sind.

Die Spulen 2 sind jeweils aus einem Stromleiter 3 gewickelt, der aus Kupfer hergestellt ist und einen massiven, rechteckigen Querschnitt aufweist. Zur elektrischen Isolation sind die Stromleiter 3 in bekannter Art und Weise mit einem Isolationslack beschichtet. Beide Enden eines jeden Stromleiters 3 sind radial abgewinkelt, wodurch an jeder Spule 2 zwei nebeneinander radial versetzt positionierte Anschlussstücke 31 gebildet sind. Im Ausführungsbeispiel sind alle ersten Anschlusstücke 31 in einer Flucht und alle zweiten Anschlussstücke 31 versetzt zu diesen in einer Flucht angeordnet.

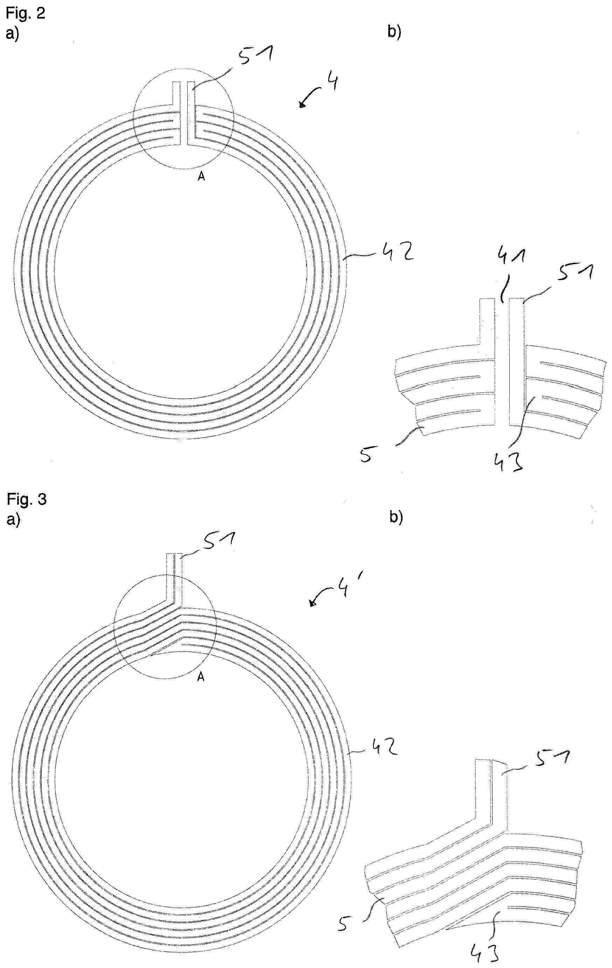

Die Kühlringscheiben 4 sind im Ausführungsbeispiel identisch ausgeführt. Sie sind kreisrund ausgebildet und aus einer Rohrleitung 5 gewickelt, die einen rechteckigen Hohlquerschnitt aufweist, wodurch ein Kanal 52 für den Durchfluss eines Kühlmittels gebildet ist. Die Wicklung der Rohrleitungen 5 ist in Form einer Wendewicklung ausgeführt, wobei das außen liegende Rohrleitungsende radial abgewinkelt ist. Das innenliegende Rohrleitungsende ist parallel zu dem außenliegenden Rohrleitungsende abgewinkelt und erstreckt sich entlang der Wendestellen 43 der Windungen 42 der Kühlringscheibe 4 bis zu dem außenliegenden Rohrleitungsende. Durch die beiden Rohrleitungsenden sind zwei beabstandet, parallel zueinander angeordnete, radial nach außen ragende Anschlusstücke 51 gebildet. Zwischen den Anschlussstücken 51 ist ein radialer Spalt 41 gebildet, der sich über die gesamte Breite der Kühlringscheibe 4 erstreckt. Die Gestaltung der Kühlringscheibe 4 ist in Figur 2 dargestellt.

An beiden Seiten eines Halbzwickels 21 einer jeden Spule 2 der Induktionsspulenanordnung 1 ist eine Kühlringscheibe 4 an dem Halbzwickel anliegend positioniert. Die Kühlringscheiben 4 sind derart ausgerichtet, dass die Anschlussstücke 51 um 90° versetzt zu den Anschlussstücken 31 der Spulen 2 in einer Flucht zueinander angestellt sind. Die Spulen 2 und die Kühlringscheiben 4 begrenzen eine zylindrische Durchführung 6 zur Aufnahme eines zu erwärmenden Metallbolzens 7.

In Figur 3 ist eine alternative Ausgestaltung einer Kühlringscheibe 4' dargestellt. Kühlringscheibe 4' ist wiederum kreisrund ausgebildet und aus einer Rohrleitung 5 gewickelt, die einen rechteckigen Hohlquerschnitt aufweist, wodurch ein Kanal 52 für den Durchfluss eines Kühlmittels gebildet ist. Die Rohrleitung 5 weist etwa hälftig ihrer Länge einen Wendepunkt auf, wodurch die beiden Hälften der Rohrleitung 5 aneinander liegen. Diese aneinander liegenden Hälften der Rohrleitung 5 sind spaltfrei durchgehend zu einem kreisrunden Ring gewickelt, wobei die beiden Rohrleitungsenden wiederum radial nach außen abgewinkelt sind, wodurch zwei aneinander liegende Anschlussstücke 51 gebildet sind.

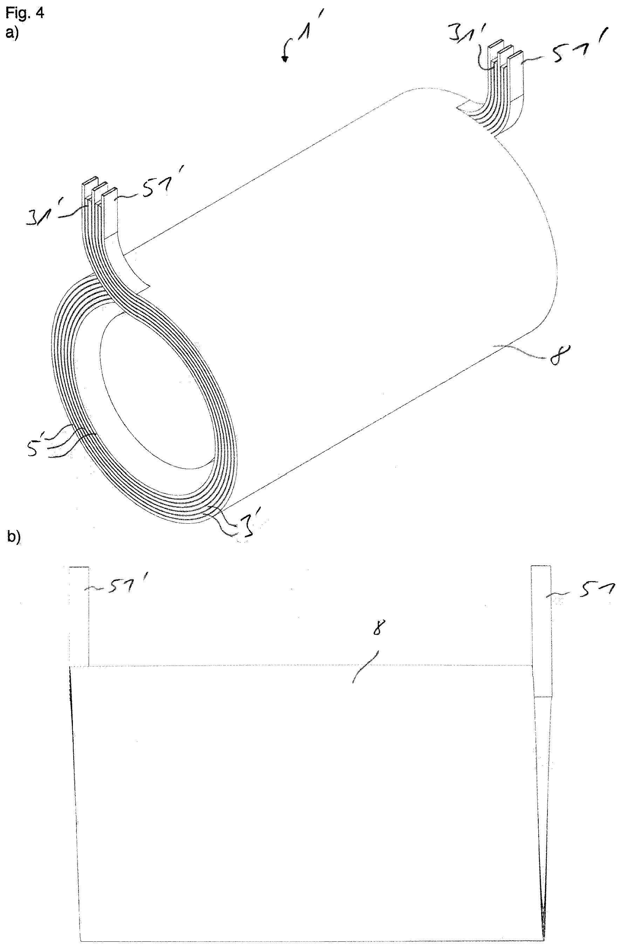

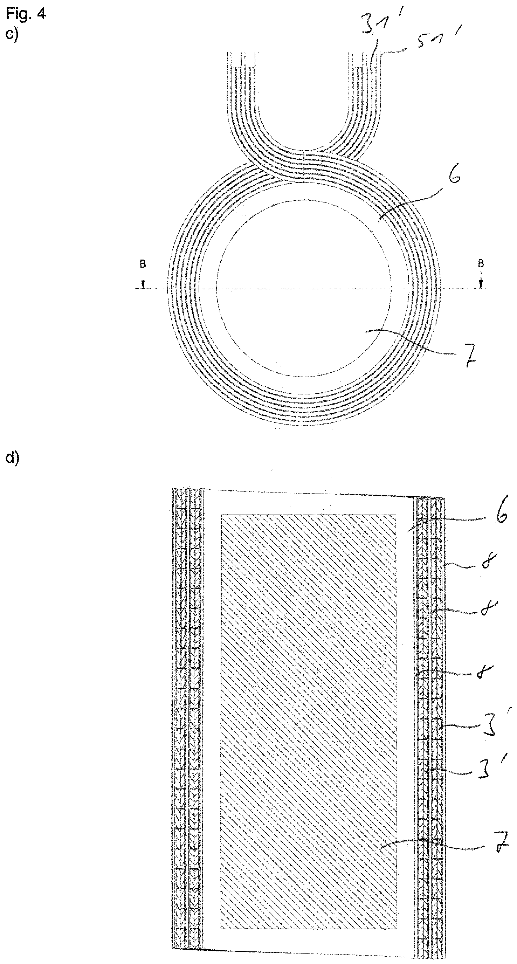

Im Ausführungsbeispiel nach Figur 4 ist die Induktionsspulenanordnung 1' durch vier Spulen 2' gebildet, die sandwichartig auf Kühlröhren 8 gewickelt sind. Dabei ist ein erstes Paar von massiven Stromleitern 3' mit rechteckigem Querschnitt auf eine erste Kühlröhre zu zwei übereinanderliegenden Spulen 2' gewickelt, die von einer zweiten Kühlröhre eingefasst sind, auf die ein zweites Paar von massiven Stromleitern 3' mit rechteckigem Querschnitt zu zwei weiteren, übereinander liegenden Spulen 2' gewickelt ist, die von einer dritten Kühlröhre 8 eingefasst sind. An ihren beiden Enden weisen die Kühlröhren 8 Anschlussstücke 81 auf, die gemeinsam mit den sandwichartig von diesen eingefassten Stromleitern 3' radial nach außen abgewinkelt sind. Durch die abgewinkelten Enden der Stromleiter 3' sind wiederum Anschlussstücke 31 gebildet. Die Kühlröhren 8 weisen Kanäle zur Durchleitung von Kühlmittel auf, die endseitig in den Anschlussstücken 81 münden. Durch die innere Kühlröhre 8 ist eine zylindrische Durchführung 6 zur Aufnahme eines zu erwärmenden Metallbolzens 7 gebildet.

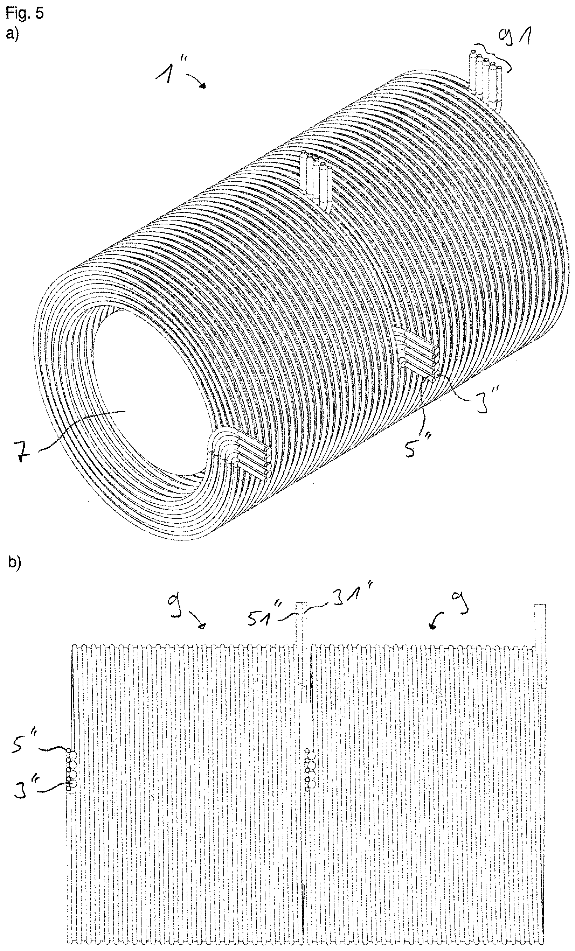

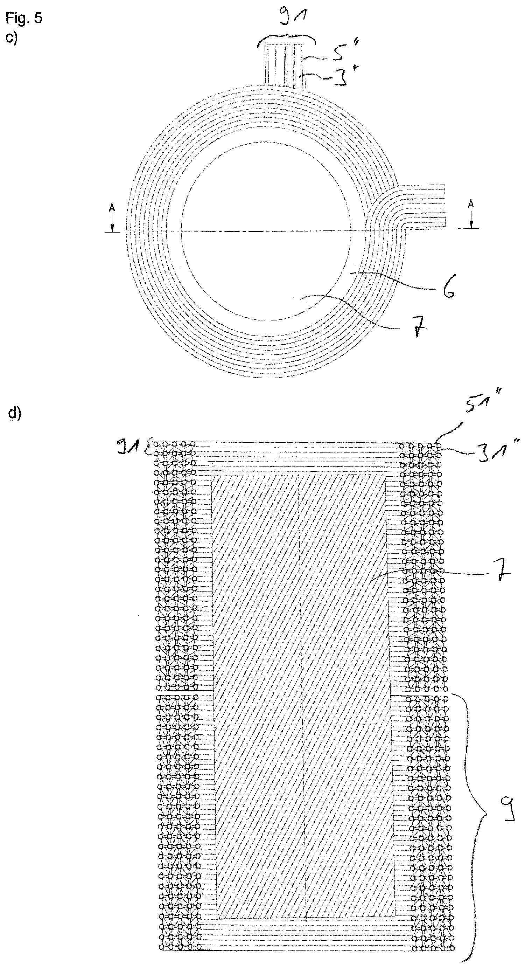

Im Ausführungsbeispiel gemäß Figur 5 umfasst die Induktionsspulenanordnung 1" zwei Spulenpaare 9, die jeweils zylinderförmig aus einem Strang 91 gewickelt sind, der aus vier massiven Stromleitern 3" mit kreisrundem Querschnitt und fünf Rohrleitungen 5" mit kreisrundem Querschnitt gebildet ist, wodurch eine zylindrische Durchführung 6 für einen zu erwärmenden Metallbolzen 7 begrenzt ist. Im Ausführungsbeispiel weist der Querschnitt der Stromleiter 3" einen Radius auf, der etwa dem Durchmesser des Querschnitts der Rohrleitungen 5" entspricht. Die Stromleiter 3" und die Rohrleitungen 5" sind in dem Strang 91 jeweils zueinander beabstandet auf einer gemeinsamen Ebene angeordnet. Dabei liegen die Stromleiter 3" jeweils tangential an zwei zueinander benachbarten Rohrleitungen 5" an. An den beiden Enden des Strangs 91 eines jeden Spulenpaares 9 sind die Enden der Stromleiter 3" und der Rohrleitungen 5" radial abgewinkelt, wodurch Anschlussstücke 31", 51" gebildet sind. Die Anschlussstücke eines jeden Spulenpaares sind dabei um 90° versetzt zueinander positioniert, wobei die Anschlussstücke 31", 51" jeweils einer ersten Seite der beiden Spulenpaare 9 sowie die Anschlussstücke 31", 51" jeweils der zweiten Seite der beiden Spulenpaare 9 parallel zueinander angeordnet sind.

## Patentansprüche

1. Vorrichtung zur induktiven Erwärmung von Metallgut, insbesondere Aluminiumstangen oder -blöcken, umfassend eine Anordnung von Induktionsspulen, die aus Wicklungen von Stromleitern (31) gebildet sind und eine Durchführung (6) für die zu erwärmenden Stangen oder Blöcke begrenzen, wobei die Stromleiter (31) durch massive Vollprofile gebildet sind und wobei Mittel zum Kühlen der Induktionsspulen (2) angeordnet sind, wobei die Mittel zum Kühlen der Induktionsspulen (2) durch Kühlringscheiben (4) gebildet sind, in denen jeweils wenigstens ein Kühlkanal (52) angeordnet ist und die zwischen den Induktionsspulen (2) angeordnet sind, **dadurch gekennzeichnet, dass** wenigstens eine der Kühlringscheiben (4) entweder in Form einer gewickelten Rohrleitung (5) mit Rechteckquerschnitt gebildet ist oder in Form einer Wendewicklung einer Rohrleitung (5) mit Rechteckquerschnitt gebildet ist und einen radialen Spalt (41) aufweist.

2. Vorrichtung nach Anspruch 1, **dadurch gekennzeichnet, dass** zwischen den Halbzwickeln (21) wenigstens einer Induktionsspule (21) eine Kühlringscheibe (4) angeordnet ist.

3. Vorrichtung nach Anspruch 1 oder 2, **dadurch gekennzeichnet, dass** die beiden Enden der Rohrleitung (5) abgewinkelt und parallel zueinander radial an die Kühlringscheibe (4) angestellt sind.

4. Vorrichtung nach einem der Ansprüche 1 bis 3, **dadurch gekennzeichnet, dass** wenigstens eine der Kühlringscheiben (4) aus einem metallischen Werkstoff oder aus Kunststoff hergestellt ist.

5. Vorrichtung nach einem der vorgenannten Ansprüche, **dadurch gekennzeichnet, dass** die Induktionsspulen (2) von einer elektrischen Spannung mit einer Frequenz von wenigstens 150 Hz, bevorzugt von wenigstens 180 Hz, besonders bevorzugt von wenigstens 250 Hz gespeist sind.

## Claims

1. Device for inductive heating of metal material, in particular aluminium bars or blocks, comprising an arrangement of induction coils, which are formed by windings of current conductors (31) and delimit a passage (6) for the bars or blocks to be heated, wherein the current conductors (31) are formed by massive solid sections and wherein means for cooling the induction coils (2) are arranged, wherein the means for cooling the induction coils (2) are formed by cooling ring discs (4), in which at least one cooling channel (52) is respectively arranged and which are arranged between the induction coils (2), **characterised in that** at least one of the cooling ring discs (4) is either formed in the shape of a wound pipe (5) with a rectangular cross-section or in the shape of a reversal winding of a pipe (5) with a rectangular cross-section and has a radial gap (41).

2. Device according to claim 1, **characterised in that** a cooling ring disc (4) is arranged between the half coils (21) of at least one induction coil (21).

3. Device according to claim 1, **characterised in that** the two ends of the pipe (5) are angled and set radially against the cooling ring disc (4) parallel to one another.

4. Device according to one of claims 1 to 3, **characterised in that** at least one of the cooling ring discs (4) is made of a metallic material or of plastic.

5. Device according to one of the previous claims, **characterised in that** the induction coils (2) are powered by an electrical voltage with a frequency of at least 150 Hz, preferably of at least 180 Hz, particularly preferably of at least 250 Hz.

## Revendications

1. Dispositif de chauffage inductif de matériaux métalliques, en particulier de barres ou de blocs en aluminium, comprenant un ensemble de bobines d'inductance qui sont formées par des bobinages de conducteurs (31) et limitent une traversée (6) pour les barres ou les blocs à chauffer, sachant que les conducteurs (31) sont formés par des profils pleins et sachant que des moyens sont disposés pour refroidir les bobines d'inductance (2), sachant que les moyens pour refroidir les bobines d'inductance (2) sont formés par des rondelles de refroidissement (4) dans lesquelles au moins un canal de refroidissement (52) est disposé et qui sont elles-mêmes disposées entre les bobines d'inductance (2), **caractérisé en ce qu'**au moins une des rondelles de refroidissement (4) a la forme d'une conduite enroulée (5) avec une section transversale rectangulaire ou d'un enroulement réversible d'une conduite enroulée (5) avec une section transversale rectangulaire et présente une fente radiale (41).

2. Dispositif selon la revendication 1, **caractérisé en ce qu'**une rondelle de refroidissement (4) est disposée entre les demi-goussets (21) d'au moins une bobine d'inductance (21).

3. Dispositif selon la revendication 1, **caractérisé en ce que** les deux extrémités de la conduite (5) sont coudées et, parallèlement l'une à l'autre, radialement en contact avec la rondelle de refroidissement (4).

4. Dispositif selon l'une des revendications 1 à 3, **caractérisé en ce qu'**au moins une des rondelles de refroidissement (4) est fabriquée en matériau métallique ou en plastique.

5. Dispositif selon l'une des revendications précédentes, **caractérisé en ce que** les bobines d'inductance (2) sont alimentées par une tension électrique avec une fréquence d'au moins 150 Hz, de préférence d'au moins 180 Hz ou, encore mieux, d'au moins 250 Hz.
